# EUROPÄISCHE PATENTANMELDUNG

(11) **EP 1 005 980 A1**
(43) Veröffentlichungstag der Anmeldung: **07.06.2000**
(21) Anmeldenummer: 99122599.6
(22) Anmeldetag: 12.11.1999
(51) Int. Cl.: B32B 31/24, E04C 2/00

(54) **Wandelement-Produktionsstrasse und Verfahren zur beidseitigen flächigen Verleimung von Wandelementen**

(30) Priorität: 14.11.1998 DE 19852633
(71) Anmelder: ASMUSSEN, Edgar, D-24941 Jarplund-Weding (DE)
(72) Erfinder: ASMUSSEN, Edgar, D-24941 Jarplund-Weding (DE)
(74) Vertreter: Biehl, Christian, Dipl.-Phys.

(57) **Zusammenfassung**

Das erfindungsgemäße Verfahren und die vorgeschlagene Produktionsstraße zur beidseitigen flächigen Verleimung von Wandelementen nutzt die Schritte: Legen der Materialien unter Zwischenauftrag von Kleber, schrittweises getaktetes Durchführen durch wenigstens eine Andruckstation unter Erwärmen der Verklebung im angedrückten Zustand durch HF-Energie, wobei ein voranschiebendes Weiterführen erst nach einem vorgewählten Zeitraum nach Abschaltung der HF-Energie erfolgt, und wobei ein weiteres Andrücken bei Aushärten des Klebers in den erwünschten Dimensionen des Wandelementes erfolgt, aus. Die Wandelement-Produktionsstraße zur Durchführung des Verfahrens besteht aus einem Lege-Transportband (16), das mit einem Walzenauftragssystem für einseitigen Klebstoffauftrag versehen ist, einem Takt-Transportband (18), das mit einem Step-Förderer versehen ist, einer Hochfrequenz-Streufeld-Anlage (28), deren elektrische Pole durch metallisch leitfähige Bänder (36) gebildet werden, die an der Stempelfläche und der Gegenlagerfläche einer Brückenpresse angeordnet sind, und einem Entnahme-Transportband (14).

## Beschreibung

Die Erfindung betrifft eine Wandelement-Produktionsstraße. Wandelemente, wie beispielsweise in der DE 25 01 330 A1 beschriebene, weisen bisher Profile aus Holz oder dergleichen zur Versteifung des Aufbaus auf, an die Isolierungsplatten und Verkleidungsplatten durch Verleimen, aber insbesondere durch die herkömmlichen Verbindungstechniken Vernageln und Verschrauben angesetzt werden. Die so in einer Fabrikfertigung erstellten Wandelemente können dann unter erheblicher Zeiteinsparung und Qualitätsgewinn beim Bauen verwandt werden.

Allerdings werden bei diesem Aufbau noch nicht die konstruktiv optimalen Festigkeitswerte in Relation zum Gewicht erreicht, da die eingebauten Profile schwer sind und unerwünschte Kältebrücken bilden, die wiederum aufwendig zu isolieren sind.

Die Erfindung hat sich zur Aufgabe gestellt, ein Verfahren und eine Vorrichtung zu entwickeln, mit denen Wandelemente optimalen Aufbaus gefertigt werden können, die die aus dem Rennsport und dem Bau moderner Hochseeyachten bekannte 'Sandwichbauweise', in der eine innige Verklebung der einzelnen flächigen Komponenten dem Element die notwendige Stabilität verleiht, nutzen. Erfindungsgemäß erfolgt dazu eine beidseitige kraftschlüssige Verleimung möglichst in einem Arbeitsgang.

Beim bisherigen Herstellungsverfahren werden vergleichsweise kleine Wandelemente, insbesondere Holzrahmenelemente, im Holzständerbau verwandt. Um jedoch die in der industriellen Fertigung möglichen Rationalisierungsressourcen nutzen zu können, sind anders als z.Zt. üblich, großformatige Wandelemente bis zu einer Größe von ca. 16m x 5m in einem Stück zu fertigen. Diese Elemente müssen wenigstens von beiden Seiten gleichmäßig und gleichzeitig verleimt werden, was Heißklebepressen aus ökonomischen und funktionszeitlichen Gründen nicht leisten können.

Heißklebepressen können die Zeit, die zum Eindringen der Wärme durch die äußere zu verleimende Schicht benötigt wird, nicht abkürzen. Zudem bestehen große Probleme, den Temperaturgradienten so zu wählen, daß innen, wo der Wärmeabfluß nicht in derselben Weise wie randseitig gewährt ist, keine zu hohe Temperaturen erzeugt werden.

Bisher werden diese großflächigen Wandelemente daher meist erst in dem Holzständer aus den verschiedenen Komponenten Dämmmaterial, Abdeck-, Holzplatten und Windschutz folien (mit Nagel- oder Schraubtechnik) oder aus kleineren Elementen zusammengesetzt.

Die Erfindung schlägt nun vor, die Wand- Decken- und Dachelemente in einer Produktionsstraße nach dem Hauptanspruch vorzuproduzieren und vor Ort lediglich zu montieren. Dabei sind schnelle Taktraten und gute Verleimung bei unterschiedlichen Wandstärken zu ermöglichen. Die Unteransprüche geben vorteilhafte Ausführungsformen der Erfindung wieder.

Weiter ist in den Ansprüchen ein Verfahren zur beidseitigen und mehrschichtigen flächigen Verleimung von Fertighauswandelementen beschrieben (im folgenden wird zur besseren Verständlichkeit statt jeweils von Wand-, Decken- und Dachelementen verallgemeinernd lediglich von Wandelementen gesprochen).

Die Holzrahmenelement-Produktionsstraße besitzt dabei erfindungsgemäß ein Lege-Transportband, das mit einem Walzenauftragssystem für einseitigen Klebstoffauftrag versehen ist, ein Takt-Transportband, das mit einem Step-Förderer versehen ist, eine Hochfrequenz-Streufeld-Anlage, die mit wenigstens einer Druckstation versehen ist, und ein Entnahme-Transportband mit einer weiteren Druckstation, einer Kalt-Zonen-Presse.

Eine Laserabtastung vor der ersten Andruckstation auf dem Takt-Transportband kontrolliert auf korrekte Blockhöhe der aus separaten Magazinen zugeführten, auf dem Lege-Transportband zusammengelegten, mit Klammern fixierten und mit Kleber versehenen Materialien. Eine Kalt-Zonen-Presse kann dann noch im Abschirmkäfig der HF-Streufeldanlage oder vorteilhafterweise auf einem der Hochfrequenz-Streufeld-Anlage unmittelbar benachbarten ersten Abschnitt des Entnahme-Transportbandes angeordnet werden, um während der Auskristallisierung die Wandelemente auf Blockhöhe unter Druck zu halten.

In der HF-Streufeld-Brückenpresse werden vorteilhafterweise auf jeder Seite jeweils nebeneinanderliegende elektrische Pole Felder erzeugen, die von oben und unten auf die Bauelemente mit geringer Eindringtiefe einwirken, während gleichzeitig von oben mit einem vergleichsweise großen Hub (z.B. 360 mm) und von unten ohne Hub oder jedenfalls mit wesentlich geringerem Hub (z.B. 15 mm) versehene Stempel der Brückenpresse einen Anpressdruck erzeugen, der den Kleber verteilt und einen innigen Kontakt der mit meist rauen Kontaktflächen versehenen Materialien bewirkt.

An den HF-Feld-Generatoren vorgesehene Zeitgeber sorgen dafür, daß eine vorgewählte, beispielsweise lediglich ca. die ersten 2/3 der Verpreßzeit andauernde HF-Feld-Aktivierung erfolgt, so daß der Kleber vor einem endgültigen Lösen des Anpressdruckes Zeit zum wenigstens teilweisen Erstarren erhält. Als Kleber wird ein PVA-Leim mit zusätzlichem HF-geeignetem Härter, z.B. BASF-Türmerleim oder Kauramin-Leim 681 mit Härter 686 vorgeschlagen.

Vorteilhaft ist insbesondere, daß es möglich wird, mit der erfindungsgemäßen Anlage bzw. dem vorgeschlagenen Verfahren mit einer Hochfrequenz-Streufeld-Anlage, die innerhalb einer Presse angeordnet ist, eine HF-Verleimung in ca. 60 Sekunden zu erreichen. Dabei ist die Verleimzeit abhängig vom verwendeten Leim und der Restfeuchte im Material. Dadurch ergibt sich eine Maschinentaktzeit von z.B. 90 Sekunden und es können unterschiedliche Materialien wie Holz, Styropor, Rigips, Fermacell, PUR-Schaum, Latten, Fliesen und Riemchen zu einem Block zusammengestellt werden.

In einer Ausführungsform der Erfindung erfolgt die Pressung in einem Step von 300 mm und vorteilhafterweise wird nach Übergabe aus der Presse heraus das Element in einer Druckstation auf Blockhöhenmaß gehalten, um den Klebstoff in den auskristallisierten Zustand übergehen zu lassen.

Mit einem ebenen Stempel und einer ebenen unteren Unterstützungsfläche, die jeweils mit eingelassenen, parallel zur Durchführrichtung angeordneten metallisch leitfähigen Bändern zur Abstrahlung der HF-Energie ausgestattet ist, ist es möglich, über die gesamte Fläche eine Verklebung zu erzeugen, so daß in einem Step, der im wesentlichen der Längserstreckung dieser Fläche entspricht, gearbeitet werden kann.

Die Streufelder, die mit wechselnder Polarität sowohl im oberen Bereich der Presse und im unteren Bereich der Presse angeordnet sind, erlauben beim Verleimen von Holz bzw. Trägermaterial und Klebstoff eine sogenannte kapazitive oder dielektrische Erwärmung im hochfrequenten Wechselspannungsfeld. Vereinfacht ausgedrückt kann man sagen, daß die kleinsten Teilchen des im Holz vorhandenen Wassers, die Moleküle, sich im elektrischen Feld ähnlich wie kleine Magnete in einem magnetischen Feld verhalten. Die Moleküle geraten dabei in hochfrequente Schwingungen und es entsteht infolge innerer Reibung durch gegenseitige Behinderung Wärme, die erwünschtermaßen gerade an den Kontaktflächen zum Leim ihr höchsten Werte erreicht.

Unter dem Einfluß der Elektrizität und der wechselnden Stromrichtung richten sich ungerichtete Wassermoleküle senkrecht zu den Elektroden aus und mit jedem Richtigungswechsel der angelegten Wechselspannung werden sich dann jeweils um 180° drehen. Dabei entsteht die gewünschte Wärme, denn die Häufigkeit des Ausrichtungsvorganges richtet sich nach der Frequenz, die beispielsweise 27,12 MHz. (+/- 0,6 %) beträgt. Die Klebefuge wird wegen der deutlich größeren dielektrischen Verluste wesentlich stär erwärmt. Außer Wassermolekülen werden auch in Kunststoff vorhandene Moleküle durch die HF-Einstrahlung erwärmt, wobei die geringe Eindringtiefe der durch vorteilhaft nur wenige Zentimeter voneinander beabstandeten Pole erzeugten Strahlung vermeidet, daß - wie insbesondere bei aufgeschäumten Werkstoffen möglich - es zu einer dauerhaften Volumenausdehnung in der Tiefe des Werkstoffes kommt, die zu Verbiegungen und Ausquellungen führen würde.

Die selektive Erwärmung an den Verklebeorten erlaubt eine erhöhte Produktionsgeschwindigkeit, da die Wärme nicht mehr von außen durch wenig wärmeleitende Schichten zugeführt werden muß, sondern sie in der Leimfuge bzw. im Holz ohne Wärmeleitverluste entsteht. Gleichzeitig kann mit Hilfe von Mikroprozessoren die zugeführte Wärme unabhängig von Schwankungen der Stromversorgung, Materialunterschieden etc. leicht und zeitnah gesteuert werden.

Weiter zeichnet sich die Klebefuge durch eine gleichmäßige Qualität aus, da durch die erwähnten Eigenschaften der HF-Strahlung eine örtliche Begrenzung der Erwärmung bei genauer Dosierung keine übermäßige Erwärmung an unerwünschtem Ort und daher auch keine Verformung des Werkstückes stattfindet und daher reproduzierbare beste Ergebnisse geliefert werden.

Als Leime für die Hochfrequenzverleimung eignen sich im besondern Polykondensationsklebstoffe und Polyvinylacetatleime. Wird von der Verleimung nur die Widerstandsfähigkeit gegen kaltes Wasser verlangt, so wird man vorzugsweise mit Kunstharzen auf Harnstoff- oder Melaminbasis arbeiten, die schon bei 70° - 90°C abbinden. Soll die Leimfuge jedoch auch gegen kochendes Wasser widerstandsfähig sein, wird man auf Phenol- oder Resorcinharze zurückgreifen, die allerdings wesentlich höhere Abbindetemperaturen benötigen.

Vorgeschlagen wird die Verwendung von Polyvinylacetat, da die anderen Klebstoffe zu Duroplasten werden und die Bearbeitungswerkzeuge nachfolgender Bearbeitungs- und Zuschneideschritte, wie z.B. Hobel, Fräse, Schleifbänder usw. später stark beanspruchen, da sie einen sehr harten Kunststoff bilden.

Diese Probleme entfallen jedoch bei der Anwendung von Leim auf der Basis von Polyvinylacetat (PVA), einem im Gegensatz zu den vorgenommenen Duroplasten thermoplastischen Leimen, bei dem das Harz während der Erwärmung keine chemische Umwandlung, sondern nur einen Austrieb von überschüssigem Wasser erfährt. Dabei wird der Leim auch nicht zu hart, wie bei den Duroplasten und kann auch nach dem Erkalten durch nachträgliches Erwärmen wieder erweicht werden.

Je nach Weichmachergehalt liegt der Erwärmungspunkt bei ca. 40°C bis 70°C. Das ist auch der Grund dafür, daß thermoplastische Leime ihre Endfestigkeit erst nach dem Erkalten der Leimfuge erreichen. Dennoch reicht die Festigkeit nach dem Verdampfen des Wassers in die Wasserdampf aufnehmenden Schichten des Wandelementes aus, damit das Werkstück noch im warmen Zustand ausgespannt werden kann. Dies ermöglicht einen großen Zeitgewinn und erhöht die Vorteile der rationelle Fertigung derart großer Elemente drastisch.

Vor der Presse werden zwei angetriebene Rollenbahnen als sog. Takttische vorgesehen. Auf einem ersten Takttisch, dem Legetisch, werden die einzelnen Komponenten zueinander ausgerichtet, um dann über einen Übergabetisch, von dem aus sie getaktet in die Presse gefördert werden, nach der Presse ggf. noch eine Kalt-Zonen-Prsse zum weiteren Aushärten unter Druck zu durchlaufen, bevor sie nachgeschaltet auf einem Abgabetisch fertig zum Zuschnitt zu liegen kommen. Vor der Hochfrequenzpresse wird über eine Laserabtastung die Höhe der Blöcke zur automatischen Steuerung des Presse erfaßt.

Weitere Merkmale und Vorteile der Erfindung ergeben sich aus nachfolgender Beschreibung eines bevorzugten Ausführungsbeispiels anhand der beigefügten Zeichnung. Dabei zeigt die
- Fig. 1: einen Schnitt quer zur Durchführrichtung durch die Brückenpresse mit schematisch eingezeichneten Feldlinien,
- Fig. 2: einen Schnitt längs der Durchführrichtung mit Darstellung der auf einem Mittenbereich der Presse vorgesehen metallischen Bänder am Rand dieses Bereichs, und
- Fig. 3: eine schematische Darstellung der gesamten Produktionsstraße von der Seite.

Die HF-Verleimung, die nach dem vorliegenden Konzept, wie in den Zeichnungen dargestellt liegend, jedoch auch wenn gewünscht schräg oder stehend zur besseren Platzausnutzung realisierbar ist (in diesem Fall sind Schmetterlingswender oder dergleichen vorzusehen), ermöglicht schelle Taktzeiten, da der Leim schnell wieder auskristallisiert.

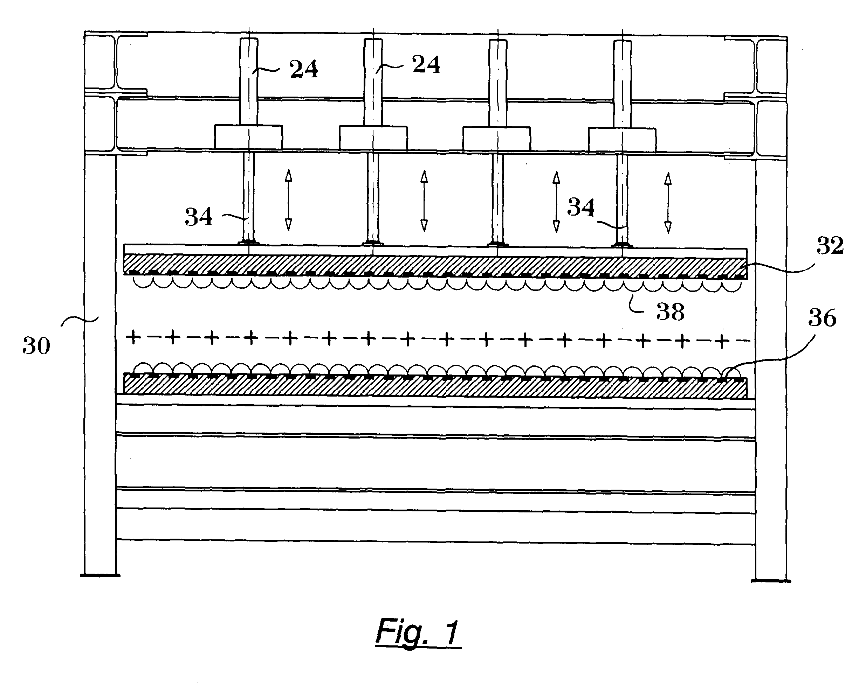

In der Fig. 1 ist anhand einer Schnittdarstellung durch die Brückenpresse die Vielzahl der parallel verlaufenden Bänder 36, der jeweils gegenpolig beaufschlagten Abstrahlpole für die HF-Energie zu erkennen. Wie aus der schematisch mit jeweils einer Feldlinie 38 verdeutlichten Abstrahlcharakteristik zu erkennen ist, werden die einige cm breiten, und ein wenig weiter voneinander beabstandeten Bänder die Energie nur wenige cm, d.h. bevorzugt bis zu einer Tiefe um die Klebefuge herum eindringen lassen. Die Brückenpresse ist dabei halb geschlossen dargestellt, d.h. die Wandelemente weisen meist etwas geringere Blockhöhe auf, können jedoch auch größere Blockhöhe besitzen.

Bezugszeichen 30 zeigt den stabilen Rahmen der Brückenpresse, Bezugszeichen 32 die stabile Stempelauflagefläche, in der Kerben für die Bänder 36 vorgesehen sind, so daß sich eine bündige Oberfläche beim Pressen ergibt. Die vorzugsweise vorgesehene Mehrzahl parallel betriebener Stempel 34 wird in Hydraulikzylinder 24 bewegt.

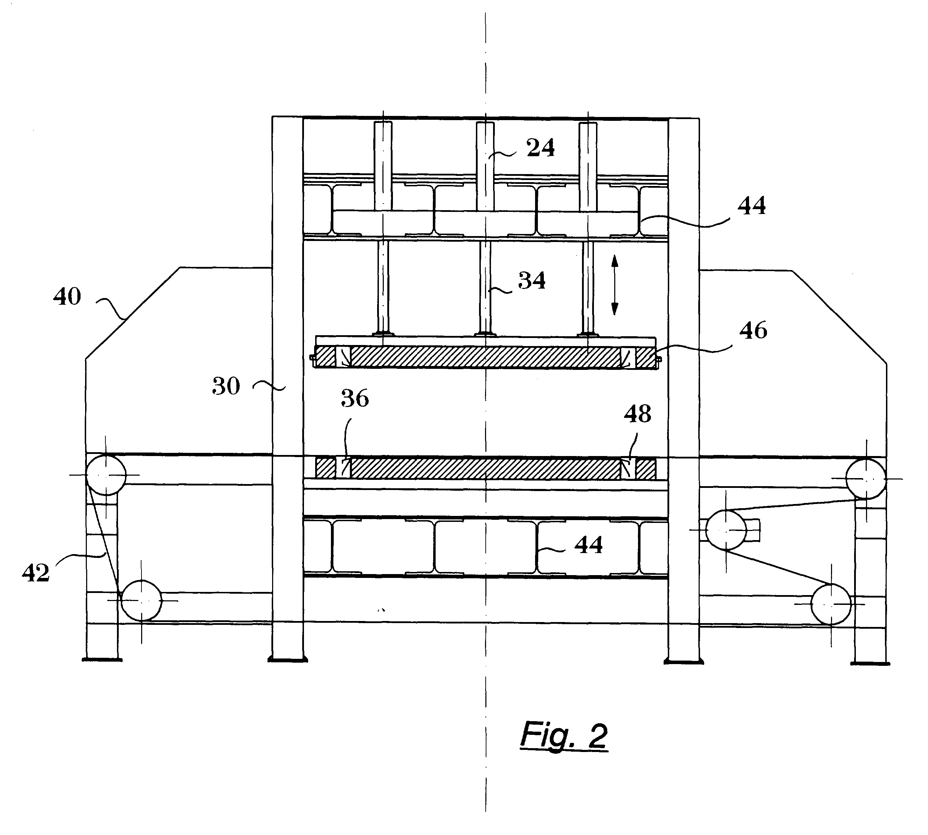

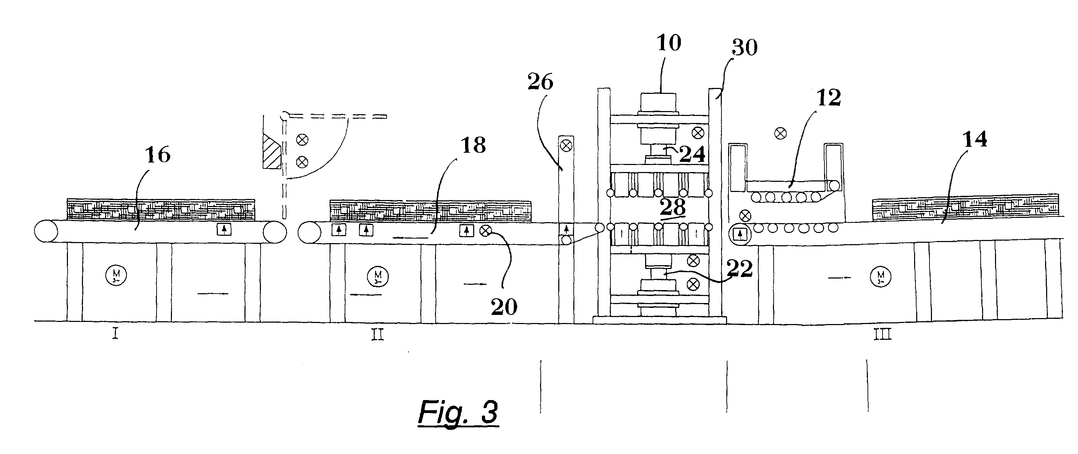

Fig. 2 zeigt die Verhältnisse aus der gleichen Perspektive wie Fig. 3, wobei jedoch noch der Abschirmkäfig 40 zur Vermeidung des Ausdringens von HF-Strahlung dargestellt ist. Die Stempelauflagefläche weist, wie beidseitig erkennbar ist, noch Endbereiche 46 auf, vor denen ein Freiraum vorgesehen ist, in dem quer zur dargestellten Erstreckung der Bänder 36 zwei voneinander vertikal beabstandete, vertikal ausgerichtete Verteilpolbänder 48 vorgesehen sind, an denen jeweils jedes zweite Band 36 wechselweise angesetzt ist.

Im oberen und unteren Bereich sind im Schnitt die starken Doppel-T-Träger zu erkennen, die den starken über die ganze Fläche aufzubringenden Anpreßdruck auffangen. Bezugszeichen 42 bezeichnet ein Transportband.

In Fig. 3 ist links der Legetisch unter Bezugszeichen 16 dargestellt, wobei mit einer Fotodiode im Legetisch das Vorhandensein eines Wandelementes erfaßt wird, und nur dann eine Abschaltung des Bandlaufes der die Wandelemente fortbewegt zugelassen wird, wenn das Teil tatsächlich das Band verlassen hat.

Strichpunktiert in zwei Verschwenkstellungen ist dann eine Pendeltür dargestellt, die in einen geschlossenen Teil der Anlage führt, wobei in einem Übergabetisch eine definierte, mit einer Wegerfassung 20 überwachte Fortbewegung in die Presse hinein stattfindet. In der Presse werden sich dann insbesondere die oberen Stempel durch die jeweilige Hydraulikzylinder 24 veranlaßt mit ca. einem Druck von 1 kg pro cm² auf das zu pressende Wandelement senken. Gleichzeitig sind in der Presse die Ausgabeelektroden für das hochfrequente elektrische Feld vorgesehen und zwar vorteilhafterweise zwei Sätze paraller Bandelektroden im oberen Bereich und zwei Sätze im unteren Bereich.

Mit der erfindungsgemäßen Hochfrequenz-Streufeld-Anlage zur beidseitigen großflächigen Verleimung von Fertighauselementen und Leimbinder bis ca. 25 m Länge wird ermöglicht, ein Produkt aus unterschiedlichen Materialien wie Holz, Sperrholzplatten, Styropor, Rigips, Fermacell, PUR-Schaum, Latten, Fliesen und Riemchen etc. zu einem Block zusammenzustellen. Der Blockaufbau ist - je nach Anforderung - unterschiedlich in den Längen und breiten, beispielsweise können jedoch Bauelemente von 300 - 12000 mm Länge bei einer Höhe von 3000 mm und einer Blockhöhe von 60 - 350 mm in einem Taktverfahren hergestellt werden.

Dabei werden die einzelnen Materialien in getrennten Magazinen bereitgehalten und je nach Schichtung einseitig und flächig mit Klebstoff versehen, wobei der Klebstoffauftrag über ein Walzenauftragssystem o.ä. erfolgt. Daraufhin werden die unterschiedlichen Materialien auf ein Lege-Transportband zu der gewünschten Elementgröße und Blockart zusammengeführt, wobei durch verstellbare Einlegehilfen das maßgerechte Zusammenfügen der Elemente gewährleistet wird. Der zusammengestellte Block wird dann durch Klammern für den Transport auf das Takt-Transportband in der festgelegten Form fixiert.

Nach der Übergabe auf den zweiten Takttisch 18 wird das gesamte Produkt verleimt, wobei jedoch zunächst der Block zu kalibrieren ist. Daraufhin wird der auf dem Taktband liegende Block z. B. im Step-Verfahren mit einer Step-Länge von 300 mm durch die Hochfrequenz-Streufeld-Anlage getaktet geschoben. Nach Verlassen der Brückenpresse und des Streufeldes wird dann der bereits beidseitig fertig verleimte Block im Takt an das Entnahme-Transportband übergeben, wobei unmittelbar nach der Übergabe an das Entnahme-Transportband, er z.B. für die Zeitdauer, die ein anschließender Block in der Brückenpresse verweilt in einer Druckstation auf Blockhöhenmaß unter Druck zum Endaushärten des Klebers gehalten wird. Dabei kann ggf. noch eine Kühlung und Trocknung zur Abfuhr austretenden Wasserdampfs (z.B. durch Erzeugung eines Unterdrucks) vorgenommen werden.

Der Vorteil dieses Schrittes ist es, dem Klebstoff zusätzliche Zeit zu geben in der vorgegebenen Blockhöhe in seinen auskristallisierten Zustand übergehen zu lassen, ohne daß die Prozeßzeit in der Brückenpresse entsprechend verlängert werden muß.

Das gesamte Verfahren zur beidseitigen flächigen Verleimung von Wandelementen besteht also aus den Schritten :
- Legen der Materialien unter Zwischenauftrag von Kleber,
- schrittweises getaktetes Durchführen durch wenigstens eine Andruckstation unter Erwärmen der Verklebung im angedrückten Zustand durch HF-Energie,
wobei ein voranschiebendes Weiterführen erst nach einem vorgewählten Zeitraum nach Abschaltung der HF-Energie erfolgt, und wobei ein weiteres Andrücken bei Aushärten des Klebers in den erwünschten Dimensionen des Wandelementes erfolgt.

Dadurch, daß eine wirksame Eindringtiefe der HF-Energie von wenigen Zentimetern lediglich bis zur Klebeschicht gewählt ist, kann die Verbleibedauer in der Presse wesentlich abgesenkt werden, da nicht nur das Aufheizen, sondern insbesondere das Abkühlen (durch die kühler verbleibenden Bereiche in der Nähe der erwärmten Kleberschicht) kürzere Zeit benötigt.

Während der HF-Einstrahlung erfolgt ein Zusammenpressen der Bauelemente um einige wenige mm zur Verteilung des Klebers bis zu 15 mm unter Blockhöhenmaß bis auf die Dicke eines ggf. vorgesehenen Holzrahmens bei Einsatz von kompressiblen Dämmstoffen in diesen.

Auf der Wandelement-Produktionsstraße zur Durchführung des Verfahrens werden die einzelnen miteinander zu verklebenden Elemente auf ein Lege-Transportband 16 aufgelegt, das mit einem Walzenauftragssystem für einseitigen Klebstoffauftrag versehen ist, das ggf. mehrmals vor dem Auflegen einer neuen Schicht Kleber aufträgt, dann einem Takt-Transportband 18 übergeben, das mit einem Step-Förderer versehen ist, und dann in einer Hochfrequenz-Streufeld-Anlage 28, deren Elektroden durch metallisch leitfähige Bänder 36 gebildet werden, die an der Stempelfläche und der Gegenlagerfläche einer Brückenpresse angeordnet sind innig miteinander unter hohem Pressdruck verbunden, und anschließend ggf. schon auf einem Entnahme-Transportband 14 einem Pressen im erkaltendem Zustand unterworfen.

Die Elektroden werden dabei durch eine Vielzahl von einander parallelen jeweils benachbart mit entgegengesetzter Polarität beaufschlagten metallisch leitfähigen Bändern 36 als Pole der Felderzeugung gebildet, die jeweils in den Stempelflächen in passenden Ausnehmungen vorgesehen sind. Die Bänder sind als mechanisch stabile mehrere Millimeter starke Metallbänder 36 im Abstand weniger Zentimeter (z.B. 5 - 6 cm) und einer Breite von ebenfalls mehreren Zentimetern (z.B. 5 cm) parallel zueinander und längs der Durchführrichtung der Wandelemente durch die Brückenpresse vorgesehen.

In einer sich an die Brückenpresse anschließenden Kalt-Zonen-Druckstation 12 mit weiteren Presstempeln erfolgt eine Nachpressung während des Aushärtens des Klebers, vorzugsweise bis zur Kristallisation dieses.

Schon vor der Brückenpresse kann zur Verteilung des teilweise zähflüssigen Klebers in den rauen Grenzflächen der zu verklebenden Schichten eine Durchlauf-Drückstation 26 auf einem der Hochfrequenz-Streufeld-Anlage unmittelbar vorangehenden Abschnitt des Takt-Transportbandes 18 vorgesehen werden.

## Patentansprüche

1. Verfahren zur beidseitigen flächigen Verleimung von Wandelementen mit den Schritten :
- Legen der Materialien unter Zwischenauftrag von Kleber,
- schrittweises getaktetes Durchführen durch wenigstens eine Andruckstation unter Erwärmen der Verklebung im angedrückten Zustand durch HF-Energie,
wobei ein voranschiebendes Weiterführen erst nach einem vorgewählten Zeitraum nach Abschaltung der HF-Energie erfolgt,
wobei ein weiteres Andrücken bei Aushärten des Klebers in den erwünschten Dimensionen des Wandelementes erfolgt.

2. Verfahren nach Anspruch 1, dadurch gekennzeichnet, daß eine wirksame Eindringtiefe der HF-Energie von wenigen Zentimetern lediglich bis zur Klebeschicht gewählt ist.

3. Verfahren nach einem der vorangehenden Ansprüche, gekennzeichnet durch ein Aufbringen der Energie mittels zweier auf jeweils den beiden Preßseiten mit in Ausnehmungen der Preßflächen nebeneinanderliegend gegenpoligen bandförmigen Elektroden gebildete Abstrahlflächen.

4. Verfahren nach einem der vorangehenden Ansprüche, gekennzeichnet durch Verwendung eines PVA-Leims mit zusätzlichem HF-geeigneter Härter.

5. Wandelement-Produktionsstraße zur Durchführung des Verfahrens nach einem der obigen Verfahrensschritte, gekennzeichnet durch
- ein Lege-Transportband (16), das mit einem Walzenauftragssystem für einseitigen Klebstoffauftrag versehen ist,
- ein Takt-Transportband (18), das mit einem Step-Förderer versehen ist,
- eine Hochfrequenz-Streufeld-Anlage (28), deren elektrische Pole durch metallisch leitfähige Bänder gebildet werden, die an der Stempelfläche und der Gegenlagerfläche einer Brückenpresse angeordnet sind, und
- ein Entnahme-Transportband (14).

6. Wandelement-Produktionsstraße nach Anspruch 4, dadurch gekennzeichnet, daß eine Vielzahl von einander parallelen jeweils benachbart mit entgegengesetzter Polarität beaufschlagten metallisch leitfähigen Bandelektroden 36 als Pole der Felderzeugung jeweils in den Stempelflächen vorgesehen sind.

7. Wandelement-Produktionsstraße nach einem der vorangehenden Ansprüche 4 oder 5, dadurch gekennzeichnet, daß mechanisch stabile mehrere Millimeter starke Metallbänder im Abstand weniger Zentimeter und einer Breite von ebenfalls mehreren Zentimetern parallel zueinander und zur Durchführrichtung der Wandelemente vorgesehen sind.

8. Wandelement-Produktionsstraße nach einem der vorangehenden Ansprüche 4 bis 6, dadurch gekennzeichnet, daß die Brückenpresse mit einer Vielzahl von oberen Stempeln (34) versehen ist, die von oben mit großen Hub arbeiten, während von unten ohne oder lediglich mit wesentlich geringerem Hub gegengehalten wird.

9. Wandelement-Produktionsstraße nach einem der vorangehenden Ansprüche 4 bis 7, gekennzeichnet durch eine Kalt-Zonen-Druckstation (12) mit weiteren Presstempeln wenigstens an der der Brückenpresse nachgeordneten Seite zur Nachpressung während des Aushärtens des Klebers.

10. Wandelement-Produktionsstraße nach einem der vorangehenden Ansprüche 4 bis 8, gekennzeichnet durch eine Laserabtastung vor der ersten Andruckstation auf dem Takt-Transportband (18) auf korrekte Blockhöhe der aus separaten Magazinen zugeführten, auf dem Lege-Transportband zusammengelegten und mit Kleber versehenen Materialien.

11. Wandelement-Produktionsstraße nach einem der vorangehenden Ansprüche 8 oder 9, dadurch gekennzeichnet, daß die weitere Druckstation (12) auf einem der Hochfrequenz-Streufeld-Anlage unmittelbar benachbarten ersten Abschnitt des Entnahme-Transportbandes (14) angeordnet ist.

12. Wandelement-Produktionsstraße nach einem der vorangehenden Ansprüche 4 bis 10, gekennzeichnet durch eine Durchlauf-Drückstation (26) auf einem der Hochfrequenz-Streufeld-Anlage unmittelbar vorangehenden Abschnitt des Takt-Transportbandes (18).

13. Wandelement-Produktionsstraße nach einem der vorangehenden Ansprüche 4 bis 11, dadurch gekennzeichnet, daß die HF-Feldgeneratoren mit Zeitgebern versehen sind, die bei Ablauf von ca. 2/3 der Verpreßzeit die Felder deaktivieren.
